# FASCICULE DE BREVET EUROPEEN

(11) **EP 2 580 259 B1**
(45) Date de publication et mention de la délivrance du brevet: **23.04.2014**
(21) Numéro de dépôt: 11725504.2
(22) Date de dépôt: 16.05.2011
(51) Int. Cl.: C08F 290/06, C08F 220/06, C08F 220/28, D21H 19/58, D21H 21/10

(54) **POLEMYERE PEIGNES (METH)ACRYLIQUES A FONCTION HYDROXY POLYALKYLENE GLYCOL, LEUR UTILISATION COMME AGENT RHEOFLUIDIFIANT DANS DES SAUCES DE COUCHAGE ET SAUCES LES CONTENANTS**
(METH)ACRYL-KAMMCOPOLYMERE MIT HYDROXYPOLYALKYLENGLYCOLFUNKTION, IHRE VERWENDUNG ALS SCHERVERDÜNNER FÜR BESCHICHTUNGSÜBERZÜGE UND ÜBERZÜGE DAMIT
(METH)ACRYLIC COMB POLYMERS HAVING A HYDROXY POLYALKYLENE GLYCOL FUNCTION, USE THEREOF AS A SHEAR RATE THINNING AGENT IN COATING SLIPS AND SLIPS CONTAINING SAME

(30) Priorité: 10.06.2010 FR 1054575
(43) Date de publication de la demande: 17.04.2013
(73) Titulaire: Coatex S.A.S, 69730 Genay (FR)
(72) Inventeur: DUPONT, François, F-69004 Lyon (FR); GUILLOT, Murielle, Wambrechies / 59118 (FR); SOUZY, Renaud, F-69300 Caluire (FR); SUAU, Jean-Marc, F-69480 Lucenay (FR)
(74) Mandataire: Fiorucci, Hélène
(86) Numéro de dépôt international: PCT/IB2011/001064
(87) Numéro de publication internationale: WO 2011/154789

(56) Documents cités:
- EP-A1- 1 201 624
- FR-A1- 2 810 261
- FR-A1- 2 913 426
- US-A- 6 034 208

## Description

La présente invention concerne le domaine du papier et porte plus particulièrement sur certains additifs connus sous l'expression de "modificateurs de rhéologie". Ces derniers entrent dans la formulation des sauces de couchage, qui sont des formulations aqueuses destinées à être appliquées à la surface de la feuille de papier.

Elle s'appuie sur une technologie désormais inscrite dans l'état de la technique : celle des polymères peignes disposant d'un squelette (méth)acrylique avec des chaînes latérales de type hydroxy ou alkoxy polyalkylène glycol, et qui entrent dans la composition de sauces de couchage papetières. Elle en propose une amélioration, basée sur le choix particulier d'un groupement hydroxy à l'extrémité de la chaîne latérale.

Par rapport à leurs prédécesseurs de l'art antérieur, les polymères peignes de la présente invention conduisent à un maintien de la rétention d'eau et de la viscosité sous bas gradient de cisaillement, mais diminuent très sensiblement la viscosité sous contrainte élevée. Cette dernière propriété, qui fait apparaître les polymères de l'invention comme des agents rhéofluidifiants, est particulièrement intéressante pour contrebalancer le phénomène d'augmentation de la pression de lame. Ceci autorise des couchages à extrait sec élevé et/ou à haute vitesse de dépose, ce qui correspond aux besoins actuels du fabricant de papier.

Dans le cadre de la fabrication de la feuille de papier par couchage, on dépose sur la surface du papier support une composition aqueuse dénommée "sauce de couchage" dont la fonction est de conférer à ladite feuille un certain nombre de propriétés, comme l'opacité, la brillance, la blancheur ou encore l'imprimabilité par les procédés d'impression offset ou héliogravure.

Ces sauces de couchage sont constituées d'eau, d'une ou plusieurs charges minérales, telles que le carbonate de calcium naturel ou synthétique, le kaolin, le talc, ou encore l'oxyde de titane, d'un ou plusieurs liants d'origine naturelle (comme les carbohydrates tel que l'amidon, la caséine, la carboxyméthylcellulose - CMC), ou synthétique (tels que les latex styrène-butadiène, styrène-acrylique, les copolymères vinyliques), ainsi que de divers additifs (dispersants, agents rétenteurs d'eau, azurants optiques, etc...).

Parmi ces additifs, il est une catégorie particulière qui permet d'optimiser les caractéristiques rhéologiques de la sauce, en relation avec les paramètres du procédé de couchage et avec les propriétés recherchées pour ladite sauce : celle des modificateurs de rhéologie. Comme indiqué par leur nom, ces produits ont pour fonction de réguler la rhéologie de la sauce, c'est-à-dire d'ajuster la viscosité de celle-ci, en fonction de la contrainte qui lui est appliquée.

A cet égard, il est tout d'abord important de disposer d'une sauce aisément pompable et filtrable dans les circuits d'alimentation du procédé de couchage et ne présentant pas de tendance à la formation de mousses ou d'éclaboussures ainsi qu'une sédimentation trop rapide. Cette exigence correspond à une augmentation de la viscosité sous bas gradient de cisaillement, ou viscosité Brookfield™ mesurée à 100 tours / minute et à 25 °C avec le dispositif du même nom, sans quoi la sauce est trop liquide.

Une autre caractéristique rhéologique importante est la viscosité sous haut gradient de cisaillement, telle qu'exprimée à travers une valeur de viscosité ACAV à 25°C mesurée dans un viscosimètre capillaire où la sauce peut subir des gradients de cisaillements élevés (de 10⁵ à 3 x 10⁶ s⁻¹) du même ordre de grandeur que ceux observés pendant le procédé de couchage lors de l'application de la lame de couchage raclant l'excès de sauce déposée. La viscosité sous haut gradient de cisaillement est un déterminant de la pression de lame à exercer. Plus la viscosité sous haut gradient de cisaillement est élevée, plus la pression de lame doit être élevée pour le contrôle du poids de couche déposé.

Or, l'augmentation de l'extrait sec des sauces de couchage et l'augmentation des vitesses de couchage sont des tendances observées depuis quelques années car elles ont des avantages économiques et/ou qualitatifs. En effet, une augmentation de l'extrait sec de la sauce de couchage permet une réduction des coûts : on diminue ainsi la quantité d'énergie nécessaire au séchage de la sauce. Cette augmentation permet aussi d'améliorer la qualité des papiers : on réduit la pénétration de la sauce dans le papier support, ce qui est favorable au développement de la brillance. Mais cette augmentation de l'extrait sec conduit à une augmentation de la viscosité sous cisaillement et par conséquence à une hausse des pressions de lame nécessaires.

Les vitesses de couchage plus élevées génèrent quand à elles une augmentation de la force hydraulique sur la lame et ainsi de la pression à exercer. Les augmentations des pressions de lame peuvent alors atteindre des niveaux inacceptables et généralement accompagnés de débordements de sauces connus sous les termes de « baves » ou « perles ».

Il devient donc utile pour l'homme du métier de disposer d'un modificateur de rhéologie permettant d'atteindre la viscosité sous bas gradient de cisaillement nécessaire et de diminuer la viscosité sous haut gradient de façon à exploiter les avantages d'une hausse de la vitesse ou d'une hausse de l'extrait sec des sauces de couchage sans dépasser les limites de son procédé et en évitant la formation des débordements. Cette problématique est relatée dans le document WO 84 / 04491. Cette double problématique d'augmenter la viscosité Brookfield™ et de diminuer la viscosité ACAV peut se résumer à la recherche d'un agent dit « rhéofluidifiant ».

Parallèlement à ces aspects rhéologiques s'inscrit une autre propriété fondamentale de la sauce de couchage : sa rétention d'eau. Après dépôt sur le papier support, la sauce possède une tendance naturelle à transférer dans le support, tout ou partie de l'eau et des substances hydrosolubles qu'elle contient. On cherche alors à réduire au maximum cette migration de l'eau et des substances hydrosolubles, en vue d'éviter une évolution de la rhéologie de la sauce de couchage non utilisée et recyclée dans le procédé de couchage. On parle alors de phénomène de rétention d'eau qu'on cherche à améliorer, c'est-à-dire à augmenter.

On connaît depuis une dizaine d'années une catégorie particulière de modificateurs de rhéologie, qui permettent notamment d'augmenter la viscosité Brookfield™ des sauces de couchage, tout en améliorant leur rétention d'eau. Il s'agit de polymères peignes, disposant d'un squelette (méth)acrylique, avec chaînes latérales alkoxy polyalkylène glycol, de formule générale suivante :

R - (AO)ₘ - (BO)ₙ - R'

où :
- m et n sont des entiers inférieurs ou égaux à 150 dont au moins un est non nul,
- A et B désignent des groupes alkyles différents l'un de l'autre, et ayant de 2 à 4 atomes de carbone, le groupement AO désignant préférentiellement l'oxyde d'éthylène et le groupement BO désignant préférentiellement l'oxyde de propylène,
- R désigne une fonction insaturée polymérisable,
- R' désigne un groupement hydroxy, ou alkyl ayant de 1 à 5 atomes de carbone.

Ces structures sont largement décrites dans les documents WO 01/96007 A1, WO 04 / 044022 A1, WO 04 / 041883 A1, WO 07 / 069037 A1 et WO 08 / 149226 A1. Ces polymères peuvent être introduits dans la sauce de couchage par l'intermédiaire de la suspension de matières minérales dont ils améliorent la rhéologie (WO 01/96007 A1). Outre leur capacité à augmenter la viscosité Brookfield™ de la sauce, ils permettent d'améliorer l'azuration optique (WO 04 / 044022 A1) et la brillance (WO 04 / 041883 A1) de celle-ci. Ils sont aussi connus pour augmenter la rétention d'eau de la sauce (WO 07 / 069037 A1). Cependant, on sait aussi qu'ils augmentent de manière très importante la viscosité sous haut gradient de cisaillement (WO 08 / 149226 A1), ce qui n'est pas compatible avec un couchage à haute vitesse et/ou à extrait sec élevé.

De plus, ces polymères apparaissent comme des structures complexes, au sens où elles sont définies à travers de multiples variables : l'espèce anionique pour le monomère constituant la chaîne principale, la possibilité de mettre en oeuvre un termonomère et/ou un agent réticulant, et pour la chaîne latérale la nature de la fonction polymérisable R, la nature et le nombre de motifs alkyloxylés, et enfin l'identité du groupement terminal (hydroxy ou alkoxy ayant de 1 à 5 atomes de carbone). En outre, les polymères majoritairement exemplifiés dans les documents précités sont des copolymères d'acide acrylique et d'acide méthacrylique, avec du méthacrylate de méthoxy polyéthylène glycol.

Or, de manière inattendue et tout à fait avantageuse, la Demanderesse a démontré que le passage à des chaînes latérales terminées par des groupements hydroxy conduit à des structures à la fois nouvelles, et qui permettent de maintenir la rétention d'eau et la viscosité Brookfield™ à des niveaux comparables à ceux atteints avec les polymères peignes de l'art antérieur à terminaison alkoxy, mais de diminuer de manière extrêmement marquée la viscosité ACAV. Personne n'avait encore songé à réaliser une telle substitution au niveau du groupement terminal de la chaîne latérale, et aucun élément ne permettait de deviner que ce choix conduirait à un tel bénéfice dans les conditions de couchage précitées.

En terme de résultats, et par rapport à des polymères peignes similaires mais aux chaînes latérales terminées par un groupement alkoxy selon l'art antérieur, les polymères de la présente invention se comportent comme :
- des agents rétenteurs d'eau au moins équivalents,
- des agents capables d'augmenter la viscosité sous bas gradient de cisaillement, à un niveau comparable,
- des agents rhéofluidifiants, en ce sens qu'ils diminuent très sensiblement la viscosité sous haut gradient de cisaillement.

On dispose dès lors d'additifs rhéologiques parfaitement adaptés à la mise en oeuvre dans une sauce de couchage, possédant un extrait sec élevé et/ou destinée à être appliquée à haute vitesse sur la feuille de papier.

Il est important d'indiquer que la substitution du groupement terminal alkoxy par un groupement hydroxy sur la chaîne latérale, est rendue possible grâce à une technologie très particulière, permettant la fabrication de tels macromonomères qui sont ensuite copolymérisés avec des monomères (méth)acryliques. Cette technologie fait l'objet du Brevet US 6 034 208 B1. Il est important de noter que le domaine technique relatif à ce brevet est celui du béton et du ciment : le mérite de la Demanderesse est donc d'autant plus grand qu'elle a su identifier une solution technique dans un secteur très éloigné du sien. Il faut enfin signaler que les polymères peignes objet de ce dernier brevet possèdent une masse molaire moyenne en poids comprise entre 5 000 g/mol et 100 000 g/mol, ce qui constitue un élément de distinction notable avec les polymères de la présente invention, dont la masse molaire moyenne en poids est au moins égale à 1 000 000 g/mol.

Aussi, un premier objet de la présente invention consiste en les polymères précités. En effet, ces derniers sont nouveau par rapport aux structures décrites dans les demandes de brevet WO 01/96007 A1, WO 04 / 044022 A1, WO 04 / 041883 A1, WO 07 / 069037 A1 et WO 08 / 149226 A1, dans la mesure où leur définition résulte de multiples choix dans de nombreuses listes qui définissaient jusqu'alors de manière générique les polymères peignes de l'art antérieur. Ils sont également nouveaux par rapport aux structures décrites dans le brevet US 6 034 208 B1, de part leur masse molaire moyenne en poids bien plus élevée.

Un deuxième objet de la présente invention réside dans les solutions aqueuses constituées d'eau et de ces polymères. Un troisième objet consiste en l'utilisation de ces polymères, comme agent ayant la fonction de rhéofluidifier une sauce de couchage. Un quatrième objet réside dans la sauce de couchage qui contient ses polymères, et un dernier objet dans un procédé de couchage d'une feuille de papier, mettant en oeuvre une telle sauce.

Le premier objet de la présente invention est donc un polymère peigne caractérisé en ce qu'il est constitué de, exprimé en pourcentage molaire de chacun de ses constituants :
a) de 60 % à 90 % d'acide acrylique et/ou méthacrylique, et préférentiellement d'acide acrylique et d'acide méthacrylique,
b) de 10 % à 40 % d'un monomère de formule :

   R - (OE)ₘ - (OP)ₙ - R'
où :
- m et n sont des entiers inférieurs ou égaux à 150 non nuls,
- OE et OP désignent respectivement l'oxyde d'éthylène et l'oxyde de propylène,
- R désigne la fonction méthacrylate,
- R' désigne un groupement hydroxy,

Dans une variante préférée et indiquée ci-dessus, le monomère a) est un mélange d'acide acrylique et d'acide méthacrylique. On démontre que c'est selon cette variante qu'on obtient la plus forte diminution de la viscosité sous haut gradient de cisaillement.

Ce polymère est aussi caractérisé caractérisée en ce qu'il présente une masse molaire moyenne en poids comprise entre 1 000 000 et 6 000 000 g/mol, telle que déterminée par GPC. On pourra notamment se reporter à la technique de mesure décrite dans le document WO 07 / 069037 A1.

Ledit polymère est obtenu par des procédés connus de copolymérisation radicalaire conventionnelle en solution, en émulsion directe ou inverse, en suspension ou précipitation dans des solvants appropriés, en présence de systèmes catalytiques et d'agents de transfert connus, ou encore par des procédés de polymérisation radicalaire contrôlée tels que la méthode dénommée Réversible Addition Fragmentation Transfer (RAFT), la méthode dénommée Atom Transfer Radical Polymerization (ATRP), la méthode dénommée Nitroxide Mediated Polymerization (NMP) ou encore la méthode dénommée Cobaloxime Mediated Free Radical Polymerization.

Il est obtenu sous forme acide et éventuellement distillé. Il peut être également partiellement ou totalement neutralisé par un ou plusieurs agents de neutralisation choisis préférentiellement parmi les hydroxydes de sodium et de potassium et leurs mélanges.

Un autre objet de la présente invention consiste en une solution aqueuse, caractérisée en ce qu'elle contient de l'eau et le polymère peigne précité.

Cette solution est caractérisée en ce qu'elle présente un extrait sec compris entre 10 % et 45 % en poids sec dudit polymère peigne par rapport à son poids total.

En outre, la solution aqueuse de polymère peut contenir un autre additif rhéologique, qui est préférentiellement une émulsion de type ASE (émulsion alcali gonflable) constituée d'acide (méth)acrylique et d'un ester de cet acide (méth)acrylique choisi parmi l'acrylate d'éthyle et/ou de butyle, ou une émulsion de type HASE (émulsion acrylique associative modifiée hydrophobiquement). La méthode de fabrication de ces mélanges est décrite dans le document WO 08 / 149226 A1.

Un troisième objet de la présente invention est l'utilisation, dans une sauce de couchage papetière, comme agent rhéofluidifiant de ladite sauce, du polymère peigne précité. Comme déjà expliqué, le caractère rhéofluidifiant signifie ici que ledit polymère permet de diminuer la viscosité sous haut gradient de cisaillement (viscosité ACAV), par rapport au même polymère peigne de l'art antérieur, mais ne disposant pas d'un groupement terminal hydroxy sur sa chaîne latérale.

Un autre objet de la présente invention est une sauce de couchage contenant le polymère peigne précité.

Cette sauce est aussi caractérisée en ce qu'elle contient :
(a) de 3 parts à 20 parts, préférentiellement de 5 parts à 15 parts en poids sec de liant, pour 100 parts en poids sec de matière minérale,
(b) de 0,1 part à 2 parts, préférentiellement de 0,1 à 1,5 parts en poids sec dudit polymère peigne, pour 100 parts en poids sec de matière minérale,
(c) de l'eau dans une quantité en poids comprise entre 20 % et 80 %, par rapport au poids total de la sauce de couchage.

La Demanderesse indique que l'homme du métier peut alors ajouter d'autres additifs entrant dans la composition habituelle d'une sauce de couchage, tels que des biocides, des agents anti mousse, des azurants optiques et des supports d'azurant optique, sans pour autant que cette liste soit exhaustive.

La sauce est également caractérisée en ce que la matière minérale est choisie parmi le carbonate de calcium naturel ou synthétique, le kaolin, le talc et les mélanges de ces charges.

Elle est aussi caractérisée en ce que le liant est choisi parmi les liants hydrosolubles et notamment l'amidon, ou parmi les liants polymères latex synthétiques tels que les styrène-acrylique et les styrène-butadiène ou leurs mélanges, ou les mélanges de ces liants.

Enfin, dans une variante particulière correspondant à une sauce dite « haut extrait sec », elle est aussi caractérisée en ce qu'elle contient de 20 % à 35 % en poids d'eau.

Un dernier objet de la présente invention consiste en un procédé de couchage d'une feuille de papier, par application à la surface de ladite feuille de la sauce précitée.

Les exemples qui suivent permettront de mieux appréhender la présente invention, sans toutefois en limiter la portée.

### EXEMPLES

Cet essai illustre la fabrication de 3 sauces de couchage papetières, chacune d'entre elles mettant en oeuvre une émulsion aqueuse à 25 % en poids sec d'un polymère peigne selon l'art antérieur (essai n° 1), ou d'un polymère peigne selon l'invention (essais n° 2 et 3).

Pour chacun de ces essais, on réalise une sauce de couchage constituée de :
- 100 parts en poids sec de carbonate de calcium commercialisé par la société OMYA™ sous le nom Hydrocarb™ 95 ME,
- 0,6 part en poids sec (par rapport au poids sec de carbonate de calcium) du polymère à tester,
- 8 parts en poids sec d'un latex styrène-butadiène commercialisé par la société DOW™ CHEMICALS sous le nom de DL 966,
- 0,4 part en poids sec d'alcool polyvinylique commercialisé par la société CLARIANT™ sous le nom de Mowiol™ 4-98,
- 0,5 part en poids sec d'un azurant optique commercialisé par la société LANXESS™ sous le nom de Blankophor™ P,

L'extrait sec de la sauce est fixé à 70,5 % de son poids total.

L'essai n° 1 illustre l'art antérieur et met en oeuvre un polymère constitué de 67,5 % en mole d'acide acrylique, 17,5 % en mole d'acide méthacrylique et 15 % en mole d'un monomère de formule (I) dans laquelle m=44, n=0 et R' est le groupement méthyle.

L'essai n° 2 illustre la variante préférée de l'invention dans laquelle le monomère carboxylique est un mélange d'acides acrylique et méthacrylique, et met en oeuvre un polymère constitué de 67,5 % en mole d'acide acrylique, 17,5 % en mole d'acide méthacrylique et 15 % en mole d'un monomère de formule (I) dans laquelle m=30, n=70 et R' est le groupement hydroxy.

L'essai n° 3 illustre l'invention, et met en oeuvre un polymère constitué de 85 % en mole d'acide acrylique et 15 % en mole d'un monomère de formule (I) dans laquelle m=30, n=70 et R' est le groupement hydroxy.

Ces 3 polymères ont une masse molaire moyenne en poids en poids de l'ordre de 3 000 000 g/mol.

Les viscosités Brookfield™ (µ_{B}) et ACAV (µ_{ACAV}) (mesurée à un gradient de cisaillement de 10⁶ s⁻¹) sont déterminées à 25 °C de même que la rétention d'eau (r_{H2O}). On pourra se reporter aux documents WO 07 / 069037 A1 et WO 08 / 149226 A1 pour leur détermination et l'appareillage mis en oeuvre.

Les résultats obtenus figurent dans le tableau 1.

**Tableau 1**

| Essai n° | Art Antérieur Invention | µ_{B} (mPa.s) | µ_{ACAV} (mPa.s) | r_{H2O} |
|---|---|---|---|---|
| 1 | Art antérieur | 780 | 171 | 114 |
| 2 | Invention | 980 | 101 | 112 |
| 3 | Invention | 850 | 158 | 112 |

Ces résultats démontrent que, tout en maintenant la viscosité Brookfield™ et la rétention d'eau à un niveau équivalent à l'art antérieur, les polymères de la présente invention permettent de diminuer très largement la viscosité sous haut gradient de cisaillement.

Cet avantage s'avère déterminant, en vue de contrebalancer l'augmentation de la pression de lame, notamment si on souhaite déposer cette sauce à haute vitesse sur une feuille de papier.

En outre, les meilleurs résultats sont obtenus pour le polymère selon l'essai n° 2, qui correspond à la variante préférée de l'invention mettant en oeuvre un mélange d'acides acrylique et méthacrylique.

L'essai n° 4 illustre l'art antérieur et met en oeuvre un polymère constitué de 70 % en mole d'acide acrylique, 15 % en mole d'acide méthacrylique et 15 % en mole d'un monomère de formule (I) dans laquelle m=44, n=0 et R' est le groupement méthyle.

L'essai n° 5 illustre l'art antérieur et met en oeuvre un polymère constitué de 85 % en mole d'acide méthacrylique et 15 % en mole d'un monomère de formule (I) dans laquelle m=44, n=0 et R' est le groupement méthyle.

L'essai n° 6 illustre l'art antérieur et met en oeuvre un polymère constitué de 85 % en mole d'acide méthacrylique et 15 % en mole d'un monomère de formule (I) dans laquelle m=110, n=0 et R' est le groupement méthyle.

L'essai n° 7 illustre la variante préférée de l'invention dans laquelle le monomère carboxylique est un mélange d'acides acrylique et méthacrylique, et met en oeuvre un polymère constitué de 70 % en mole d'acide acrylique, 15 % en mole d'acide méthacrylique et 15 % en mole d'un monomère de formule (I) dans laquelle m=15, n=46 et R' est le groupement hydroxy.

L'essai n° 8 illustre l'invention, et met en oeuvre un polymère constitué de 85 % en mole d'acide acrylique et 15 % en mole d'un monomère de formule (I) dans laquelle m=15, n=46 et R' est le groupement hydroxy.

Ces 5 polymères ont une masse molaire moyenne en poids en poids de l'ordre de 2 500 000 g/mol.

Les viscosités Brookfield™ (µ_{B}) et ACAV (µ_{ACAV}) (mesurée à un gradient de cisaillement de 10⁶ s⁻¹) sont déterminées à 25 °C de même que la rétention d'eau (r_{H2O}). On pourra se reporter aux documents WO 07 / 069037 A1 et WO 08 / 149226 A1 pour leur détermination et l'appareillage mis en oeuvre.

Les résultats obtenus figurent dans le tableau 2.

**Tableau 2**

| Essai n° | Art Antérieur Invention | µ_{B} (mPa.s) | µ_{ACAV} (mPa.s) | r_{H2O} |
|---|---|---|---|---|
| 4 | Art antérieur | 800 | 170 | 112 |
| 5 | Art antérieur | 750 | 165 | 108 |
| 6 | Art antérieur | 820 | 171 | 108 |
| 7 | Invention | 1020 | 102 | 110 |
| 8 | Invention | 1000 | 160 | 110 |

On aboutit aux mêmes conclusions que pour le tableau 1.

Enfin, on ajoute que dans les essais n° 1 à 8, les polymères ont été introduits dans la sauce de couchage sous forme d'une solution aqueuse d'un extrait sec en polymère égal à 30 % en poids du poids total de ladite solution.

## Revendications

1. Polymère peigne **caractérisé en ce qu'**il est constitué de, exprimé en pourcentage molaire de chacun de ses constituants :
a) de 60 % à 90 % d'acide acrylique et/ou méthacrylique, et préférentiellement d'acide acrylique et d'acide méthacrylique,
b) de 10 % à 40 % d'un monomère de formule :
R - (OE)ₘ - (OP)ₙ - R'
où :
- m et n sont des entiers inférieurs ou égaux à 150 non nuls,
- OE et OP désignent respectivement l'oxyde d'éthylène et l'oxyde de propylène,
- R désigne la fonction méthacrylate,
- R' désigne un groupement hydroxy,

2. Polymère selon la revendication 1, caractérisé **caractérisée en ce qu'**il présente une masse molaire moyenne en poids comprise entre 1 000 000 et 6 000 000 g/mol, telle que déterminée par GPC.

3. Solution aqueuse, **caractérisée en ce qu'**elle contient de l'eau et le polymère peigne selon une des revendications 1 ou 2.

4. Solution selon la revendication 3, **caractérisée en ce qu'**elle présente un extrait sec compris entre 10 % et 45 % en poids sec dudit polymère peigne par rapport à son poids total.

5. Solution selon la revendication 4, **caractérisée en ce qu'**elle contient un autre additif rhéologique, qui est préférentiellement une émulsion de type ASE (émulsion alcali gonflable) constituée d'acide (méth)acrylique et d'un ester de cet acide (méth)acrylique choisi parmi l'acrylate d'éthyle et/ou de butyle, ou une émulsion de type HASE (émulsion acrylique associative modifiée hydrophobiquement).

6. Utilisation, dans une sauce de couchage papetière, comme agent rhéofluidifiant de ladite sauce, du polymère peigne selon une des revendications 1 ou 2.

7. Sauce de couchage contenant le polymère peigne selon une des revendications 1 ou 2.

8. Sauce selon la revendication 7, **caractérisée en ce qu'**elle contient :
(a) de 3 parts à 20 parts, préférentiellement de 5 parts à 15 parts en poids sec de liant, pour 100 parts en poids sec de matière minérale,
(b) de 0,1 part à 2 parts, préférentiellement de 0,1 à 1,5 parts en poids sec dudit polymère peigne, pour 100 parts en poids sec de matière minérale,
(c) de l'eau dans une quantité en poids comprise entre 20 % et 80 %, par rapport au poids total de la sauce de couchage.

9. Sauce selon une des revendications 7 ou 8, **caractérisée en ce qu'**elle contient d'autres additifs choisis parmi des biocides, des agents anti mousse, des azurants optiques et des supports d'azurant optique.

10. Sauce selon une des revendications 7 à 9, **caractérisée en ce que** la matière minérale est choisie parmi le carbonate de calcium naturel ou synthétique, le kaolin, le talc et les mélanges de ces charges.

11. Sauce selon une des revendications 7 à 10, **caractérisée en ce que** le liant est choisi parmi les liants hydrosolubles et notamment l'amidon, ou parmi les liants polymères latex synthétiques tels que les styrène-acrylique et les styrène-butadiène ou leurs mélanges, ou les mélanges de ces liants.

12. Sauce selon une des revendications 7 à 11, **caractérisée en ce qu'**elle contient de 20 % à 35 % en poids d'eau.

13. Procédé de couchage d'une feuille de papier, par application à la surface de ladite feuille de la sauce selon une des revendications 7 à 12.

## Patentansprüche

1. Kammpolymer, **dadurch gekennzeichnet, dass** es aus Folgendem besteht, ausgedrückt in Molprozent seiner einzelnen Bestandteile:
a) 60 % bis 90 % an Acryl- und/oder Methacrylsäure, und vorzugsweise an Acrylsäure und Methacrylsäure,
b) 10 % bis 40 % eines Monomers der Formel:
R - (OE)ₘ -(OP)ₙ - R'
wobei:
- m und n ganze Zahlen sind, die ungleich null sind und kleiner oder gleich 150 sind,
- OE und OP Ethylenoxid beziehungsweise Propylenoxid bezeichnen,
- R die funktionelle Methacrylatgruppe bezeichnet,
- R' eine Hydroxylgruppe bezeichnet.

2. Polymer nach Anspruch 1, **dadurch gekennzeichnet, dass** es ein Gewichtsmittel des Molekulargewichts im Bereich von 1.000.000 g/mol bis 6.000.000 g/mol aufweist, gemäß einer Bestimmung mittels GPC.

3. Wässrige Lösung, **dadurch gekennzeichnet, dass** sie Wasser und das Kammpolymer nach einem der Ansprüche 1 oder 2 enthält.

4. Lösung nach Anspruch 3, **dadurch gekennzeichnet, dass** sie einen Trockenextrakt im Bereich von 10 % bis 45 % an Trockengewicht des Kammpolymers aufweist, bezogen auf ihr Gesamtgewicht.

5. Lösung nach Anspruch 4, **dadurch gekennzeichnet, dass** sie ein weiteres Rheologieadditiv enthält, wobei es sich vorzugsweise um eine Emulsion des Typs ASE (Loesliche Alkaliemulsion), die aus (Meth)acrylsäure und aus einem Ester dieser (Meth)acrylsäure besteht, welcher aus Ethyl- und/oder Butylacrylat ausgewählt ist, oder um eine Emulsion des Typs HASE (Loesliche und Hydrophob Modifizierte Alkaliemulsion) handelt.

6. Verwendung des Kammpolymers nach einem der Ansprüche 1 oder 2 in einer Papierstreichmasse, als Rheologiemittel zur Verbesserung der Fließfähigkeit dieser Masse.

7. Streichmasse, die das Kammpolymer nach einem der Ansprüche 1 oder 2 enthält.

8. Masse nach Anspruch 7, **dadurch gekennzeichnet, dass** sie Folgendes enthält:
(a) 3 Teile bis 20 Teile, vorzugsweise 5 Teile bis 15 Teile nach Trockengewicht an Bindemittel, auf 100 Teile nach Trockengewicht an Mineralstoff,
(b) 0,1 Teile bis 2 Teile, vorzugsweise 0,1 Teile bis 1,5 Teile nach Trockengewicht von dem Kammpolymer, auf 100 Teile nach Trockengewicht an Mineralstoff,
(c) Wasser in einer gewichtsmäßigen Menge, die im Bereich von 20 % bis 80 % liegt, unter Bezugnahme auf das Gesamtgewicht der Streichmasse.

9. Masse nach einem der Ansprüche 7 oder 8, **dadurch gekennzeichnet, dass** sie weitere Additive enthält, die aus den Bioziden, den Schaumverhütern, den optischen Aufhellern und den Trägem für optische Aufheller ausgewählt sind.

10. Masse nach einem der Ansprüche 7 bis 9, **dadurch gekennzeichnet, dass** der Mineralstoff aus natürlichem oder synthetischem Calciumcarbonat, Kaolin, Talkum und den Mischungen dieser Füllstoffe ausgewählt ist.

11. Masse nach einem der Ansprüche 7 bis 10, **dadurch gekennzeichnet, dass** das Bindemittel aus den wasserlöslichen Bindemitteln und insbesondere aus Stärke, oder aus den Polymerbindemitteln des Typs synthetischer Latex wie etwa des Typs Styrol-Acryl und StyrolButadien oder deren Mischungen, oder aber Mischungen dieser Bindemittel ausgewählt ist.

12. Masse nach einem der Ansprüche 7 bis 11, **dadurch gekennzeichnet, dass** sie 20 bis 35 Gewichts-% an Wasser enthält.

13. Verfahren zum Streichen eines Papierbogens, durch Aufbringen der Masse nach einem der Ansprüche 7 bis 12 auf die Oberfläche dieses Bogens.

## Claims

1. Comb polymer **characterized in that** it is consists of, expressed as molar percentages of each of its constituents:
a) 60% to 90% acrylic and/or methacrylic acid, and preferentially acrylic acid and methacrylic acid,
b) 10% to 40% of a monomer with the formula:
R - (EO)ₘ - (PO)ₙ - R'
where:
- m and n are non-zero integers less or equal to 150,
- EO and PO respectively designate ethylene oxide and propylene oxide,
- R designates the methacrylate function,
- R' designates a hydroxy group.

2. Polymer according to claim 1, **characterized in that** it presents a mean molar mass by weight of between 1,000,000 and 6,000,000 g/mol, as determined by GPC.

3. Aqueous solution, **characterized in that** it contains water and the comb polymer according to one of the claims 1 or 2.

4. Solution according to claim 3, **characterized in that** it presents a dry extract of between 10% and 45% by dry weight of the said comb polymer in relation to its total weight.

5. Solution according to claim 4, **characterised in that** it contains another rheological additive which is preferentially an emulsion of the ASE type (alkali swellable emulsion) constituted of (meth)acrylic acid and an ester of this (meth)acrylic acid chosen from ethyl and/or butyl acrylate, or an emulsion of the HASE (hydrophobically modified alkali swellable emulsion) type.

6. Use, in a paper coating dispersion as a shear-thinning agent of the said dispersion, of the comb polymer according to one of claims 1 or 2.

7. Coating dispersion containing the comb polymer according to one of claims 1 or 2.

8. Dispersion according to claim 7, **characterized in that** it contains:
(a) from 3 parts to 20 parts, preferentially from 5 parts to 15 parts by dry weight of binder per 100 parts by dry weight of mineral substances,
(b) from 0.1 parts to 2 parts, preferentially from 0.1 parts to 1.5 parts by dry weight of comb polymer per 100 parts by dry weight of mineral substances,
(c) water in a quantity by weight of between 20% and 80%, in relation to the total weight of the coating dispersion.

9. Dispersion according to one of claims 7 or 8, **characterized in that** it contains other additives chosen from among biocides, anti foam agents, optical brighteners and optical brightener media.

10. Dispersion according to one of claims 7 to 9, **characterized in that** the mineral substance is selected from natural or synthetic calcium carbonate, kaolin, talc and mixtures of these substances.

11. Dispersion according to claims 7 to 10, **characterized in that** the binder is chosen from among the water-soluble binders and notably starch, or from among the synthetic latex polymer binders such as styrene-acrylic and styrene-butadiene or their mixtures, or mixtures of these binders.

12. Dispersion according to one of claims 7 to 11, **characterized in that** it contains 20% to 35% by weight of water.

13. Coating process for a sheet of paper, by application to the surface of the said sheet the dispersion according to one of claims 7 to 12.
